# EUROPEAN PATENT APPLICATION

(11) **EP 4 765 424 A1**
(43) Date of publication of application: **24.06.2026**
(21) Application number: 25841432.5
(22) Date of filing: 15.07.2025
(51) Int. Cl.: H01M 50/375, H01M 50/342, H01M 50/249

(54) **BATTERY MODULE, BATTERY PACK AND VEHICLE INCLUDING SAME**

(30) Priority: 18.07.2024 KR 20240095252
(71) Applicant: LG Energy Solution, Ltd., Seoul 07335 (KR)
(72) Inventor: JO, Yeong-Shin, Daejeon 34122 (KR); KWON, Hee-Yong, Daejeon 34122 (KR); SON, Hong-Se, Daejeon 34122 (KR); AN, Seong-Woo, Daejeon 34122 (KR)
(74) Representative: Plasseraud IP
(86) International application number: PCT/KR2025/010391
(87) International publication number: WO 2026/019231

(57) **Abstract**

The present disclosure may provide a battery module that includes a plurality of battery cells, a top cover configured to cover one surface of the plurality of battery cells, and at least one thermal deformation member disposed between the top cover and the battery cells, and configured to expand in volume and deform a portion of the top cover when a temperature reaches a preset temperature or higher due to heat.

## Description

### TECHNICAL FIELD

The present disclosure relates to a battery module, and a battery pack and vehicle including the same.

This application is based on and claims priority from Korean Patent Application No. 10-2024-0095252, filed on July 18, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module frame. Therefore, if a thermal event occurs in any one of the battery cells, the high-temperature gas and flame discharged therefrom may propagate to adjacent battery cells, leading to a chain reaction of battery cell explosions, which poses a significant safety risk.

In particular, since a module frame of a battery module is made of metal, it may act as a heat source when a thermal event occurs within the battery module or an adjacent module, promoting thermal propagation between battery modules.

Accordingly, the battery module is configured to have holes in the upper portion of the module and include a frame cover configured to cover the outer surface of the module frame, in particular, the upper surface, thereby preventing foreign substances or gases from entering the battery module under normal conditions, and causing the module cover to rupture by pressure in the event of a thermal runaway of the battery module to allow the gases or flames to be vented.

However, when a thermal event occurs in an adjacent battery module, the external pressure of the battery module increases, and the module cover of the battery module where thermal runaway has not occurred is also damaged by the pressure, causing high-temperature gas and/or flames to flow into the affected area, thereby accelerating thermal runaway.

Therefore, there is a need to develop a structure capable of preventing thermal runaway propagation by preventing the module cover of a battery module where thermal runaway has not occurred from being damaged by the pressure difference between the inside and outside of the module.

### DISCLOSURE

### Technical Problem

The present disclosure is designed to solve the problems of the related art, and therefore the present disclosure is directed to providing a battery module that facilitates the discharge of high-temperature gases or flames generated from the battery cell in the event of an abnormal situation within the battery module, while minimizing their spread to adjacent battery modules, thereby effectively preventing or delaying the propagation of thermal runaway between the modules.

The present disclosure is also directed to providing a battery module with an improved structure, a battery pack including the same, and a vehicle including the battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including a plurality of battery cells, a top cover configured to cover one surface of the plurality of battery cells, and at least one thermal deformation member disposed between the top cover and the battery cells, and configured to expand in volume and deform a portion of the top cover when a temperature reaches a preset temperature or higher due to heat.

The battery module may further include a module frame configured to accommodate the plurality of battery cells, and the module frame may include at least one first venting hole formed at a position corresponding to the thermal deformation member and configured to discharge gas generated from the battery cell to the outside.

When heat is applied to the thermal deformation member and the temperature of the thermal deformation member reaches a preset temperature or higher, at least a portion of the thermal deformation member may be configured to pass through the first venting hole.

The first venting hole may be configured to be sealed by the top cover under normal conditions, and at least one of the first venting holes may be configured to be opened when the temperature of the thermal deformation member reaches a preset temperature or higher.

The top cover may include a first cover fixed to the module frame, and at least one second cover surrounded by the first cover and configured to cover the first venting hole.

The central portion of the second cover may correspond to the first venting hole, and the edge portion of the second cover may be disposed to be in contact with the module frame.

The second cover may be configured such that its position is changed due to the thermal deformation member.

When heat is applied to the thermal deformation member and the temperature of the thermal deformation member reaches a preset temperature or higher, the thermal deformation member may be configured to expand upward toward the second cover, and the second cover may be configured to move upward.

A plurality of thermal deformation members may be disposed in at least one direction.

The horizontal width of the thermal deformation member may be smaller than the horizontal width of the first venting hole.

The thermal deformation member may include at least one of a foaming agent and a shape memory alloy.

The plurality of battery cells may be disposed in a horizontal direction, and the first venting hole may be configured to cover one surface facing an upper surface of the plurality of battery cells.

In another aspect of the present disclosure, there is provided a battery pack including a battery according to the present disclosure.

In another aspect of the present disclosure, there is provided a vehicle including a battery pack according to the present disclosure.

### Advantageous Effects

According to one aspect of the present disclosure, when the temperature of a thermal deformation member whose volume changes with temperature reaches a preset temperature or higher due to a thermal event occurring within a battery module, at least a portion of the top cover can be opened to allow internal gas or flames to be discharged to the outside.

In addition, according to another aspect of the present disclosure, a top cover covering a venting hole of the module frame can minimize the inflow of high-temperature gas or flames generated from an adjacent battery module into the battery module in the event of an abnormal situation in the adjacent battery module, thereby effectively preventing or delaying the propagation of thermal runaway between the modules. Thus, the safety and reliability of the battery module can be guaranteed.

In addition, according to another aspect of the present disclosure, since the top cover is disposed and supported on the module frame, the top cover is not damaged by external temperature and/or pressure when a thermal event occurs outside the battery module, thereby preventing external gas or flames from entering the battery module. Thus, the safety and reliability of the battery module may be guaranteed.

In addition, according to another aspect of the present disclosure, it is possible to prevent or delay events resulting from thermal runaway, such as fire or explosion, in a battery pack including multiple battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view of a battery module according to an embodiment of the present disclosure.
FIG. 2 is a schematic perspective view of a module frame of a battery module according to an embodiment of the present disclosure.
FIG. 3 is an exploded perspective view of a battery module according to an embodiment of the present disclosure.
FIG. 4 is a cross-sectional view of a battery module according to an embodiment of the present disclosure.
FIG. 5 is an enlarged cross-sectional view of part A in FIG. 4 illustrating a battery module in a normal state according to an embodiment of the present disclosure.
FIG. 6 is an enlarged cross-sectional view of part A in FIG. 4 illustrating a battery module during thermal runaway according to an embodiment of the present disclosure.
FIG. 7 is a perspective view of a battery module during thermal runaway according to an embodiment of the present disclosure.
FIG. 8 is a perspective view of a battery module during thermal runaway according to another embodiment of the present disclosure.
FIG. 9 is a schematic perspective view of a battery pack including a battery module according to an embodiment of the present disclosure.
FIG. 10 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In addition, for purposes of better understanding the present disclosure, the accompanying drawings are not necessarily drawn to scale, and the dimensions of certain elements may be exaggerated for clarity. In addition, the same reference numerals may indicate the same elements across different embodiments.

Ordinal terms such as "first," "second," and the like may be used to describe various components, but the components are not limited by these terms. These terms are used solely to distinguish one component from another. Therefore, unless explicitly stated otherwise, a first component may be the same as a second component.

Throughout the specification, unless otherwise expressly stated, each component may be singular or plural.

Hereinafter, the configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'joined' to another element" should be understood that the two elements may be directly connected or joined to each other, and that another element may be "interposed" between the two elements, or that the two elements may be "connected," "coupled," or "joined" via another element.

A single element used herein should be construed to encompass a plurality of elements, unless stated otherwise. In this specification, the expression "one component 'is configured as' or 'includes' elements or steps" should not be understood that the component must all of the elements or steps, and should be understood that the component may exclude some of the elements or steps and that the component may further include additional elements or steps.

Throughout the specification, unless otherwise stated, the expression "A and/or B" may refer to A, B, or both A and B, and the expression "C to D" may refer to a range including values equal to or greater than C and equal to or less than D.

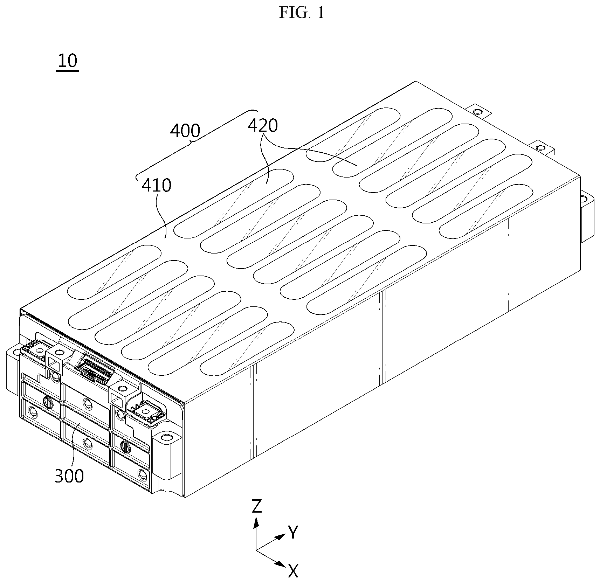

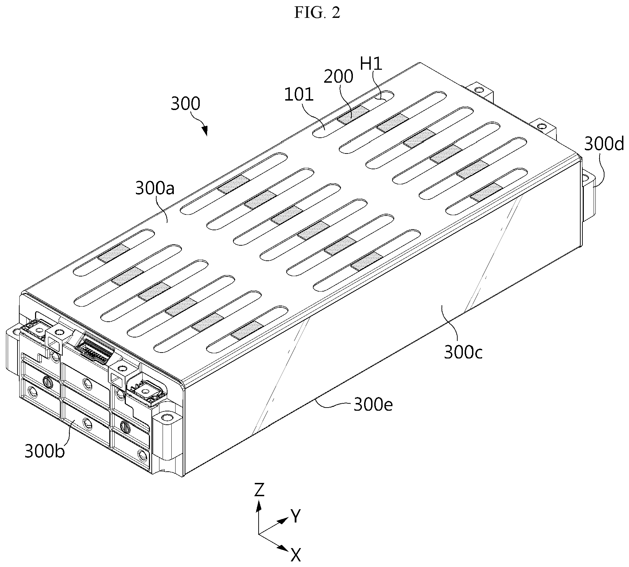

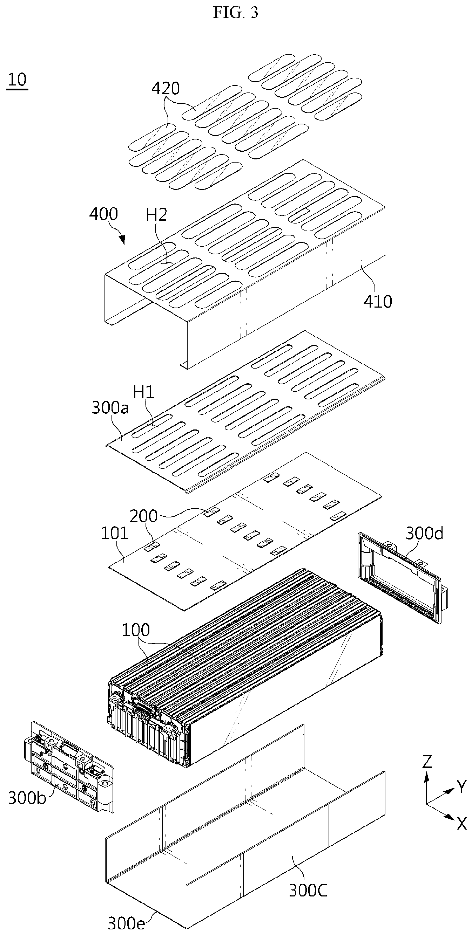

FIG. 1 is a schematic perspective view of a battery module 10 according to an embodiment of the present disclosure. FIG. 2 is a schematic perspective view of a module frame 300 of a battery module 10 according to an embodiment of the present disclosure. FIG. 3 is an exploded perspective view of a battery module 10 according to an embodiment of the present disclosure.

Referring to FIGS. 1 to 3, a battery module 10 according to an embodiment of the present disclosure may include a battery cell 100, a thermal deformation member 200, and a top cover 400. In another aspect, the battery module 10 may further include a module frame 300 in addition to the aforementioned components.

Referring to FIG. 3, a plurality of battery cells 100 may be included. In this case, the plurality of battery cells 100 may be electrically connected to each other.

The plurality of battery cells 100 may be stacked along one direction. For example, as illustrated in FIG. 3, the plurality of battery cells 100 may be disposed side by side in the front-back direction (X-axis direction) while standing in the vertical direction (Z-axis direction).

In addition, the plurality of battery cells 100 may be pouch-type secondary batteries. The plurality of battery cells 100 may include an electrode assembly, a cell case that stores the electrode assembly, and an electrode lead connected to the electrode assembly and extending outside the cell case, functioning as an electrode terminal.

The present disclosure is not limited to a specific type or shape of the battery cell 100, and various battery cells 100 known at the time of filing the present disclosure may be applied to the plurality of battery cells 100 of the present disclosure. In the present embodiment, although a pouch-type secondary battery with high energy density and easy stacking will be described as shown in the drawing, it is obvious that a cylindrical or prismatic secondary battery may also be applied to the battery cell 100.

Referring to FIGS. 2 and 3, the module frame 300 may be configured to accommodate the battery cell 100. Specifically, an inner space may be formed in the module case 300, and the battery cells 100 may be stored in the inner space.

The module frame 300 may be configured to include a metal material with rigidity and heat resistance to physically and chemically protect the accommodated battery cells 100.

A first venting hole H1 may be formed in the module frame 300. The first venting hole H1 may be configured to discharge venting gas generated from the battery cells 100 to the outside of the module frame 300. The first venting hole H1 enables directional venting in one direction. The module frame 300 may include a first plate 300a disposed on a first surface of a cell stack including the plurality of battery cells 100.

The first venting hole H1 may be formed in the first plate 300a of the module frame 300. For example, as illustrated in FIGS. 2 and 3, the first plate 300a may be defined as the upper surface of the module frame 300, and directional venting in an upward direction of the battery module 10 may be enabled through the first venting hole H1 formed in the upper surface of the module frame 300.

A plurality of first venting holes H1 may be provided at regular intervals in the horizontal direction (X-axis and Y-axis directions). According to the above-implemented configuration of the present disclosure, in a situation where one of the plurality of battery cells 100 undergoes thermal runaway and generates gas or the like, the gas or the like may be quickly vented in a specific direction by the first venting holes H1 corresponding to the corresponding battery cell 100.

In addition, the module frame 300 may have a module terminal. The module terminal may be configured to be electrically connected to the plurality of battery cells 100. In addition, the module terminal may be configured to be electrically or communicatively connected to a control device such as a BMS. The module terminal may be configured to extend at least partially outward from the module frame 300. The module terminal may be provided on the side from which the electrode leads of the battery cells 100 extend. The module frame 300 may include a second plate 300b configured to cover a second surface of the cell stack. In particular, the module terminal may be provided on the second plate 300b of the module frame 300. For example, as illustrated in FIGS. 1 to 3, the second plate 300b may be defined as the front surface of the module frame 300, and the module terminal may be provided on the front side of the module frame 300.

Referring to FIG. 2, the module frame 300 according to an embodiment of the present disclosure may further include a third plate 300c, a fourth plate 300d, and a fifth plate 300e. The first plate 300a to the fifth plate 300e may form the exterior of the module frame 300. The module frame 300 may be formed in a cuboid shape with the first plate 300a to the fifth plate 300e.

More specifically, the third plates 300c may be provided on both left and right ends of the first plate 300a. That is, a pair of third plates 300c may be provided to face each other. For example, as disclosed in the embodiment illustrated in the drawing, the first plate 300a may form the upper surface of the module frame 300, and the third plates 300c may form both left and right sides of the module frame 300 on both sides of the first plate 300a.

In addition, the fifth plate 300e may be configured to face the first plate 300a. For example, as disclosed in the embodiment illustrated in the drawing, the first plate 300a may form the upper surface of the module frame 300, and the fifth plate 300e may form the lower surface of the module frame 300.

In this case, referring to FIG. 3, the third plates 300c and the fifth plate 300e may be configured in an integrated form. In this case, the combined shape of the third plates 300c and the fifth plate 300e may be a "U"-shaped tube with an upper opening and front and rear openings. Alternatively, in another embodiment, although not shown in the drawing, the first plate 300a, the third plates 300c, and the fifth plate 300e may be configured in an integrated form. In this case, the combined shape of the first plate 300a, the third plates 300c, and the fifth plate 300e may be a rectangular tube with front and rear openings.

The fourth plate 300d may be provided opposite the second plate 300b. That is, the second plate 300b and the fourth plate 300d may be configured to face each other. The second plate 300b and the fourth plate 300d of the module frame 300 may be positioned on the sides from which the electrode leads of the battery cells 100 extend outward. That is, the second plate 300b and the fourth plate 300d may be positioned on the side where a busbar frame assembly is provided.

For example, as disclosed in the embodiment illustrated in the drawing, the second plate 300b may be configured to form the front surface of the module frame 300, and the fourth plate 300d may be configured to form the rear surface of the module frame 300. The second plate 300b and the fourth plate 300d may be coupled to the front and rear openings of the integrated third and fifth plates 300c and 300e.

According to an embodiment, the top cover 400 may be configured to cover one surface of a plurality of battery cells 100. The top cover 400 may be provided outside the module frame 300. The top cover 400 may constitute the outer surface of the battery module 10. The top cover 400 may perform waterproofing, dustproofing, and/or heat insulating functions to protect the battery module 10. The top cover 400 may be configured to prevent venting gas or flames, emitted when a thermal event occurs within the battery module 10, from spreading to other battery modules 10. In addition, the top cover 400 may be configured to prevent external venting gas or flames from entering the battery module 10.

The top cover 400 may be configured to cover at least a portion of the module frame 300. For example, the top cover 400 may be configured to cover at least the first plate 300a of the module frame 300. For example, the top cover 400 may be configured to further cover at least one of the third plates 300c of the module frame 300 provided at both left and right ends of the first plate 300a. That is, the top cover 400 may be configured to further cover, along with the first plate 300a, at least one third plate 300c. For example, as disclosed in the embodiment illustrated in FIG. 3, the top cover 400 may be configured to cover the first plate 300a provided at the top and the third plates 300c provided on the left and right sides.

The top cover 400 may be configured to be bent at the boundary between the first plate 300a and the third plate 300c, thereby covering both the first plate 300a and the third plate 300c. That is, the top cover 400 may be configured by bending a single sheet.

According to the above-implemented configuration of the present disclosure, the top cover 400 may cover not only the first plate 300a having the first venting holes H1, but also both sides of the first plate 300a, thereby preventing venting gas or flames released due to a thermal event occurring within the module frame 300 from venting toward the third plate 300c. Additionally, the top cover 400 may block venting gas or flames from heading toward the third plate 300c from the outside.

The top cover 400 may be formed of a material with excellent heat and/or fire resistance, such as a sheet including mica or a silicone composite material. For example, the top cover 400 may be formed of an inflexible material by thermoforming a sheet including mica. Accordingly, the top cover 400 may maintain morphological stability without deformation even when exposed to high-temperature heat, thereby stably blocking high-temperature gases or flames generated from the battery cell 100. According to the above-implemented configuration of the present disclosure, since the top cover 400 is made of a rigid and heat-resistant material, deformation due to high-temperature gases or flames may be minimized.

The top cover 400 may be configured to protect the first venting holes H1. For example, the top cover 400 may be configured to prevent venting gases or flames released from another battery module 10 from entering the module frame 300 through the first venting holes H1.

According to the above-implemented configuration of the present disclosure, since the top cover 400 is configured to protect the first venting holes H1, it is possible to minimize the movement of high-temperature venting gas or flames toward the first venting hole H1 of the battery module 10 in the event of an abnormality in the adjacent battery module 10. In particular, since the top cover 400 covers the module frame 300 from multiple directions, thermal propagation to the outside of the module frame 300 or to the module frame 300 may be effectively suppressed. Therefore, according to the above-implemented configuration of the present disclosure, thermal runaway propagation between the battery modules 10 may be effectively prevented or delayed, thereby ensuring the safety and reliability of the battery module 10.

More specifically, the top cover 400 may include a first cover 410 fixed to the module frame 300 and at least one second cover 420 surrounded by the first cover 410 and configured to cover the first venting hole H1.

A second venting hole H2 may be formed in the first cover 410. The second venting hole H2 may be configured to discharge venting gases generated in the battery cell 100 to the outside of the battery module 10. For example, the second venting hole H2 may be formed in the upper surface of the first cover 410. The second venting hole H2 formed in the upper surface of the first cover 410 may induce directional venting in the upward direction of the battery module 10.

A plurality of second venting holes H2 may be provided at regular intervals in the horizontal direction (X-axis and Y-axis directions). In particular, the second venting holes H2 may be formed at positions corresponding to the first venting holes H1. The second venting holes H2 may be configured to discharge the venting gas released through the first venting holes H1 to the outside of the battery module 10. Therefore, according to the above-implemented configuration of the present disclosure, the venting gas or flame may be rapidly and directionally vented in a specific direction through the first venting holes H1 and the second venting holes H2. For example, the venting gas or flame may be rapidly vented upward (in the +Z-axis direction) through the first venting holes H1 and the second venting holes H2.

The size of the second venting hole H2 may be larger than the size of the first venting hole H1. For example, the width of the second venting hole H2 in the horizontal direction (e.g., X-axis and Y-axis directions) may be larger than the width of the first venting hole H1 in the horizontal direction (e.g., X-axis and Y-axis directions).

The second cover 420 may cover the first venting hole H1 and be surrounded by the first cover 410. A plurality of second covers 420 may be provided at regular intervals in the horizontal direction (X-axis and Y-axis directions). The number, shape, and/or position of the second covers 420 may correspond to the number, shape, and/or position of the second venting holes H2. The number, shape, and/or position of the second covers 420 may be substantially the same as the number, shape, and/or position of the second venting holes H2. The number and/or position of the second covers 420 may correspond to the number and/or position of the first venting holes H1.

According to an embodiment of the present disclosure, a thermal deformation member 200 may be further included between the top cover 400 and the battery cells 100. The thermal deformation member 200 may include a thermal deformation material whose volume changes due to heat. The thermal deformation material may be defined as a material whose volume expands when heat is applied to the thermal deformation member 200 and the temperature of the thermal deformation member 200 reaches a preset temperature or higher. The thermal deformation member 200 may include, for example, a foaming agent configured to generate bubbles and thereby expand the volume. The thermal deformation member 200 may include, for example, a shape memory alloy configured to return to its original shape when heated.

According to an embodiment, a plurality of thermal deformation members 200 may be provided at regular intervals in the horizontal direction (X-axis and Y-axis directions). In particular, the thermal deformation member 200 may be formed at a position corresponding to the first venting hole H1.

According to the above embodiment of the present disclosure, the present disclosure may be configured to structurally deform more dependent on temperature than pressure when a thermal event occurs in the battery module 10 by including the thermal deformation member 200. In general, a tear line may be broken by structural deformation not only when the internal pressure increases due to a thermal event occurring inside the battery module 10, but also when the external pressure increases due to a thermal event occurring in an adjacent battery module 10, causing external venting gas or flame to flow into the battery module 10. On the other hand, according to the present disclosure, since the thermal deformation member 200 is configured to experience structural deformation primarily dependent on the temperature of the thermal deformation member 200 located within the battery module 10, it is possible to prevent structural deformation caused by external venting gas or flame. Therefore, thermal propagation to neighboring battery cells 100 or battery modules 10 may be minimized, thereby effectively preventing or delaying the propagation of thermal runaway.

According to an embodiment, the battery module 10 may further include a cell cover 101 disposed between the thermal deformation member 200 and the battery cells 100. The cell cover 101 may be configured to cover the upper surface of the battery cells 100. The thermal deformation member 200 may be disposed and/or fixed on the cell cover 101. The function, structure, or the like of the thermal deformation member 200 will be described in detail below.

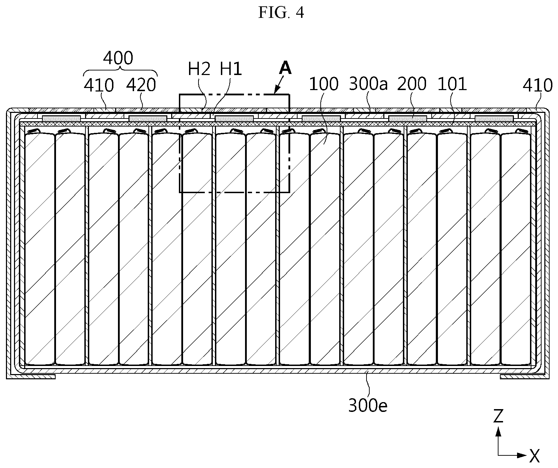

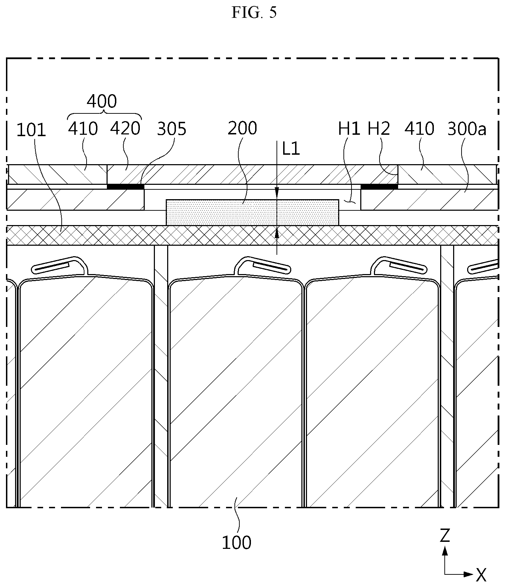

FIG. 4 is a cross-sectional view of a battery module 10 according to an embodiment of the present disclosure, and FIG. 5 is an enlarged cross-sectional view of part A in FIG. 4 illustrating a battery module 10 in a normal state according to an embodiment of the present disclosure. Here, the battery module 10 in the normal state may be defined as a state in which no thermal event occurs within the battery module 10.

Referring to FIGS. 4 and 5, the battery module 10 according to an embodiment of the present disclosure may include a battery cell 100, a thermal deformation member 200, a module frame 300, and a top cover 400. The configurations of the battery cell 100, the thermal deformation member 200, the module frame 300, and the top cover 400 in FIGS. 4 and 5 may be entirely or partially identical to the configurations of the battery cell 100, the thermal deformation member 200, the module frame 300, and the top cover 400 in FIGS. 1 to 3. The embodiment shown in FIGS. 4 and 5 may be partially combined with the embodiment shown in FIGS. 1 to 3.

According to an embodiment, the top cover 400 may include a first cover 410 secured to the module frame 300, and at least second cover 420 surrounded by the first cover 410 and configured to cover the first venting hole H1.

The first cover 410 may be configured to be seated on the module frame 300. That is, the first cover 410 may be configured to be placed on the upper portion of the module frame 300 and cover at least a portion of the module frame 300. When the first cover 410 is seated on the module frame 300, the first cover 410 may be configured to come into close contact with the module frame 300. More specifically, the first cover 410 may be fixed to the module frame 300. For example, an adhesive may be applied to the lower surface of the first cover 410. For example, the adhesive applied to the lower surface of the first cover 410 may include a thermally conductive adhesive such as TIM or thermal resin.

The plurality of second covers 420 may be configured to respectively cover the plurality of first venting holes H1 from above. That is, the plurality of second covers 420 may be configured to individually cover the plurality of first venting holes H1. That is, the first venting hole H1 provided on the side of the battery cell 100 where a thermal event has not occurred may remain closed by the second cover 420. To this end, the second cover 420 may be made of a material with excellent flame retardancy. For example, the second cover 420 may include a material such as silicone or FRB. The second cover 420 may block not only heat but also high-temperature gases, flames, and discharged materials generated from the battery cell 100. Therefore, according to the above-implemented configuration of the present disclosure, thermal propagation to the side of the battery cell 100 where a thermal event has not occurred may be prevented, thereby preventing the temperature of the thermal deformation member 200 from rising to a level that would cause the volume of the thermal deformation member 200 to expand.

The size of the second cover 420 may be formed to be larger than the size of the first venting hole H1. In addition, a portion of the second cover 420 may be configured to be seated on the module frame 300. That is, the central portion of the second cover 420 corresponding to the first venting hole may be disposed so that the lower surface is not in contact, and the edge portion of the second cover 420 corresponding to the module frame 300 may be disposed to contact the module frame 300. Accordingly, the second cover 420 may move upward when pressure is applied from the bottom upward (in the +Z-axis direction). However, when pressure is applied from the top downward (in the -Z-axis direction), the second cover 420 may be restricted by the module frame 300 and may not move downward.

Accordingly, when venting gas or flames is generated within the battery module 10, the second cover 420 may be pushed upward. However, when venting gas or flames flow in from the outside through an adjacent battery module 10, the second cover 420 is not pushed downward. That is, according to the above-implemented configuration of the present disclosure, when thermal runaway occurs in the battery module 10, not only may the venting gas or flames generated within the battery module 10 be smoothly discharged to the outside of the battery module 10, but the discharged venting gas or flames may also be prevented from flowing back into the battery module 10 and/or the venting gas or flames formed externally may also be prevented from flowing into the battery module 10. Therefore, by minimizing thermal propagation to neighboring battery cells 100 or battery modules 10, the propagation of thermal runaway may be effectively prevented or delayed.

According to an embodiment of the present disclosure, an adhesive member 305 may be further included between the second cover 420 and the module frame 300. The second cover 420 may be secured to the module frame 300 by the adhesive member 305. For example, the adhesive member 305 may include an adhesive component whose adhesive strength is weakened by heat. According to an embodiment, the adhesive member 305 disposed between the second cover 420 and the module frame 300 may include a material with a weaker adhesive strength than the adhesive disposed between the first cover 410 and the module frame 300. Therefore, when a thermal event occurs in the battery cell 100, the adhesive strength of the adhesive member 305 disposed between the second cover 420 and the module frame 300 may be weakened, allowing the second cover 420 and the module frame 300 to be easily separated from each other.

According to an embodiment, the first cover 410 and the second cover 420 may be configured as different materials from each other. For example, the material of first cover 410 may be different from the material of the second cover 420. For example, the thickness of the second cover 420 may be smaller than that of the first cover 410. For example, the weights of the first cover 410 and the second cover 420 may be different from each other. For example, the weight of the second cover 420 may be less than that of the first cover 410. By configuring the weight of the second cover 420 to be relatively small, the second cover 420 may be easily lifted by the upward force of the thermal deformation member 200.

According to an embodiment, the thermal deformation member 200 may be disposed on one surface of the battery cells 100 facing upward (+Z-axis direction). The thermal deformation member 200 may be disposed at a position corresponding to the first venting hole H1. At least a portion of the thermal deformation member 200 may be disposed within the first venting hole H1. The thermal deformation member 200 may be disposed under the second cover 420. The thermal deformation member 200 may be disposed to face the bottom surface of the second cover 420. For example, the thermal deformation member 200 may be disposed to be spaced apart from the second cover 420 by a predetermined distance without contact therewith.

According to the above-implemented configuration of the present disclosure, when a thermal event occurs within the battery module 10, the volume of the thermal deformation member 200 may be configured to expand when the temperature of the thermal deformation member 200 reaches a preset temperature or higher. For example, the thermal deformation member 200 may be configured to expand in volume when a thermal event occurs within the battery module 10, and not to expand in volume by being insulated by the top cover 400 or the like when a thermal event occurs outside the battery module 10.

The preset temperature may range, for example, from 70°C to 90°C. However, the preset temperature is not limited to the above-described embodiment and may be designed in various ways so as to include the temperature when a thermal event occurs inside the battery module 10 and exclude the temperature of heat transmitted when a thermal event occurs outside the battery module 10.

The horizontal width of the thermal deformation member 200 may be smaller than the horizontal width of the first venting hole H1. Not only under normal conditions, but also when a thermal event occurs, the horizontal size of the thermal deformation member 200 may be smaller than the horizontal size of the first venting hole. Accordingly, when a thermal event occurs within the battery module 10, the thermal deformation member 200 may be configured to pass through the first venting hole H1. That is, when heat is applied to the thermal deformation member 200 and the temperature of the thermal deformation member 200 reaches a preset temperature or higher, the thermal deformation member 200 may be configured to pass through the first venting hole H1.

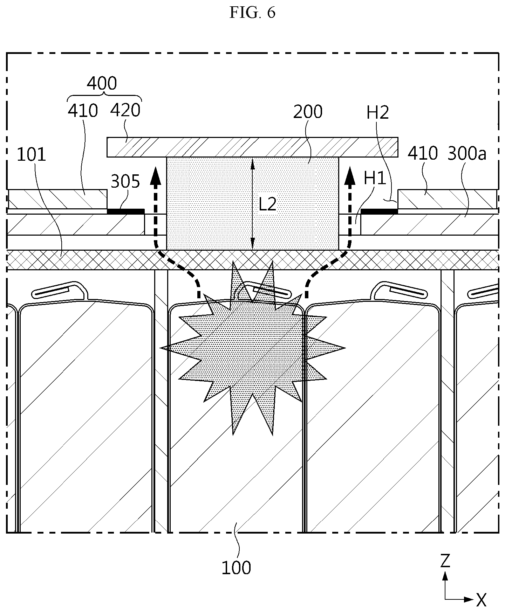

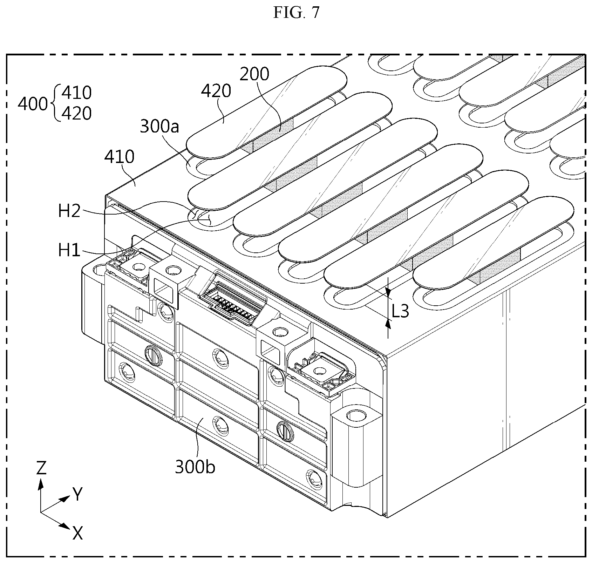

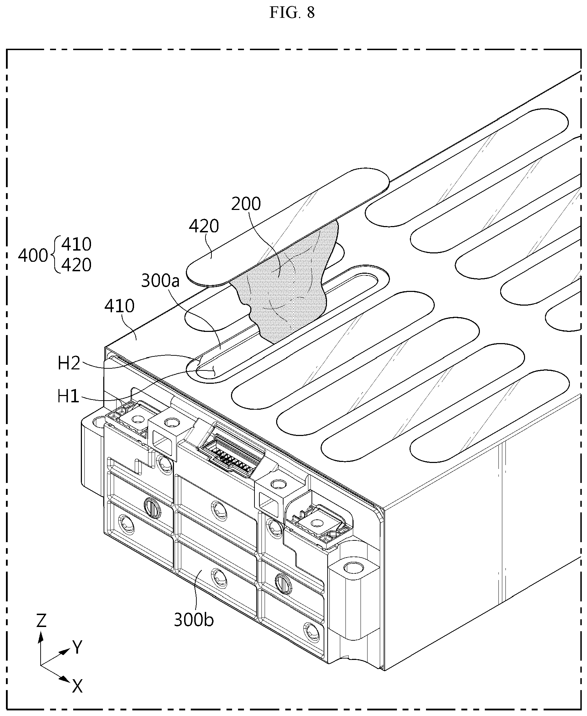

FIG. 6 is an enlarged cross-sectional view of part A in FIG. 4 illustrating a battery module 10 during thermal runaway according to an embodiment of the present disclosure. FIG. 7 is a perspective view of a battery module 10 during thermal runaway according to an embodiment of the present disclosure. FIG. 8 is a perspective view of a battery module 10 during thermal runaway according to another embodiment of the present disclosure.

Referring to FIGS. 6 to 8, a battery module 10 according to an embodiment of the present disclosure may include a battery cell 100, a thermal deformation member 200, a module frame 300, and a top cover 400. The configurations of the battery cell 100, the thermal deformation member 200, the module frame 300, and the top cover 400 in FIGS. 6 to 8 may be entirely or partially identical to the configurations of the battery cell 100, the thermal deformation member 200, the module frame 300, and the top cover 400 in FIGS. 4 and 5. The embodiments in FIGS. 6 to 8 may be partially combined with the embodiment in FIGS. 4 and 5.

According to an embodiment, when heat is applied to the thermal deformation member 200 and the temperature of the thermal deformation member 200 reaches a preset temperature or higher, the height of the thermal deformation member 200, i.e., the length in the Z-axis direction, may increase. Referring to FIGS. 5 and 6, in a normal state, the vertical height of the thermal deformation member 200 is a first length L1, and when a thermal event occurs within the battery module 10, the height of the thermal deformation member 200 may change to a second length L2 that is larger than the first length.

Referring to FIG. 5, when the battery module 10 is in a normal state, the vertical (Z-axis direction) height of the thermal deformation member 200 may be a first length L1. Here, the first length L1 may be configured to be smaller than the gap between the cell cover 101 and the second cover 420. However, the first length L1 may be designed in various ways within a range shorter than the gap between the cell cover 101 and the second cover 420.

Referring to FIG. 6, when a thermal event occurs in the battery module 10, the vertical (Z-axis direction) height of the thermal deformation member 200 may be a second length L2. The second length L2 may be configured to be greater than the gap between the cell cover 101 and the second cover 420. However, the second length L2 may be designed in various ways within a range greater than the gap between the cell cover 101 and the second cover 420.

When a thermal event occurs within the battery module 10 and the height of the thermal deformation member 200 increases from the first length L1 to the second length L2, the second cover 420 disposed above the thermal deformation member 200 may be lifted by a force generated by the volume expansion of the thermal deformation member 200, for example, by an upward force. That is, the second cover 420 may be configured such that its position is changed due to the thermal deformation member 200. That is, the second cover 420 may move upward. For example, referring to FIG. 7, the second cover 420 may move upward by a third length L3.

Referring to FIG. 6, when the second cover 420 is lifted, the second venting hole H2 may be opened, so that venting gas or flame generated within the battery module 10 may be discharged to the outside of the battery module 10 through the first venting hole H1 and the second venting hole H2. That is, the first venting hole H1 may be configured to be sealed by the top cover 400 under normal conditions, and when the temperature of the thermal deformation member 200 reaches a preset temperature or higher, at least one first venting hole H1 may be configured to be opened.

When the temperature of the thermal deformation member 200 reaches a preset temperature or higher, its height increases, and the expansion pattern of its volume may be configured in various ways. For example, referring to FIG. 7, only the height of the thermal deformation member 200 may increase while its horizontal width and shape remain. For example, referring to FIG. 8, the overall shape, as well as its height, may be configured to change irregularly. However, the volume change of the thermal deformation member 200 may be irreversible. That is, even if the temperature drops back below the preset temperature, the thermal deformation member 200 may not return to its original shape.

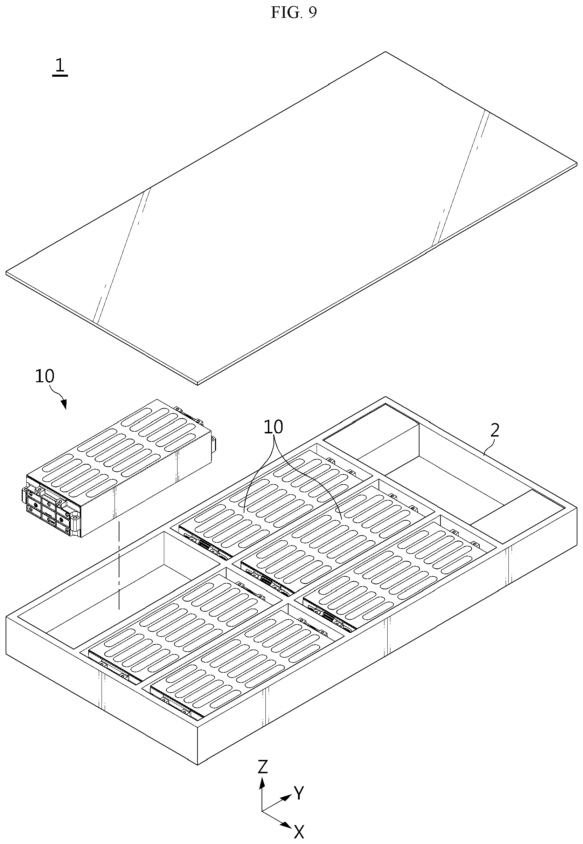

FIG. 9 is a schematic perspective view of a battery pack 1 including a battery module 10 according to an embodiment of the present disclosure.

Referring to FIG. 9, the battery pack 1 according to an embodiment of the present disclosure may include one or more battery modules 10 according to an embodiment of the present disclosure described above. The battery pack 1 according to the present disclosure may further include a pack case 2 that accommodates a BMS (Battery Management System) for integrated control of charging and discharging of one or more battery modules 10, a current sensor, a fuse, or the like, as well as the above-described components.

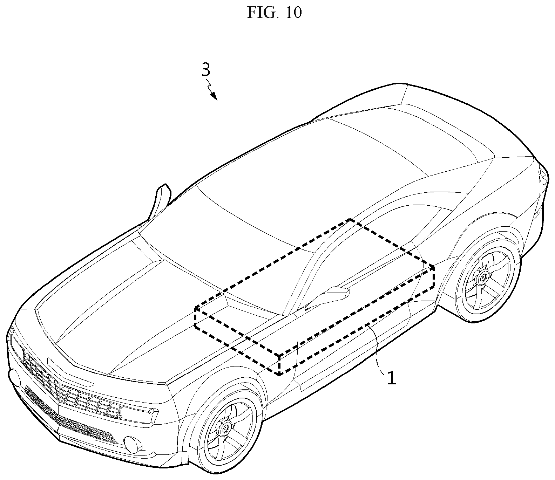

FIG. 10 is a schematic perspective view of a vehicle 3 including a battery pack 1 according to an embodiment of the present disclosure.

Referring to FIG. 10, the vehicle 3 according to an embodiment of the present disclosure may include one or more battery packs 1 according to an embodiment of the present disclosure, or one or more battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by receiving power from the battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a top cover configured to cover one surface of the plurality of battery cells; and
at least one thermal deformation member disposed between the top cover and the battery cells, and configured to expand in volume and deform a portion of the top cover when a temperature reaches a preset temperature or higher due to heat.

2. The battery module of claim 1,
further comprising a module frame configured to accommodate the plurality of battery cells,
wherein the module frame comprises at least one first venting hole formed at a position corresponding to the thermal deformation member and configured to discharge gas generated from the battery cell to an outside.

3. The battery module of claim 2,
wherein, when heat is applied to the thermal deformation member and a temperature of the thermal deformation member reaches a preset temperature or higher, at least a portion of the thermal deformation member is configured to pass through the first venting hole.

4. The battery module of claim 2,
wherein the first venting hole is configured to be sealed by the top cover under normal conditions, and at least one of the first venting holes is configured to be opened when a temperature of the thermal deformation member reaches a preset temperature or higher.

5. The battery module of claim 2,
wherein the top cover comprises:
a first cover fixed to the module frame; and
at least one second cover surrounded by the first cover and configured to cover the first venting hole.

6. The battery module of claim 5,
wherein a central portion of the second cover corresponds to the first venting hole, and an edge portion of the second cover is disposed to be in contact with the module frame.

7. The battery module of claim 5,
wherein the second cover is configured such that its position is changed due to the thermal deformation member.

8. The battery module of claim 5,
wherein, when heat is applied to the thermal deformation member and a temperature of the thermal deformation member reaches a preset temperature or higher, the thermal deformation member is configured to expand upward toward the second cover, and the second cover is configured to move upward.

9. The battery module of claim 1,
wherein a plurality of thermal deformation members are disposed in at least one direction.

10. The battery module of claim 2,
wherein a horizontal width of the thermal deformation member is smaller than a horizontal width of the first venting hole.

11. The battery module of claim 2,
wherein the thermal deformation member comprises at least one of a foaming agent and a shape memory alloy.

12. The battery module of claim 2,
wherein the plurality of battery cells are disposed in a horizontal direction, and
wherein the first venting hole is configured to cover one surface facing an upper surface of the plurality of battery cells.

13. A battery pack comprising a battery module according to any one of claims 1 to 12.

14. A vehicle comprising a battery pack according to claim 13.
